# EUROPÄISCHE PATENTSCHRIFT

(11) **EP 2 230 132 B1**
(45) Veröffentlichungstag und Bekanntmachung des Hinweises auf die Patenterteilung: **25.05.2016**
(21) Anmeldenummer: 09075335.1
(22) Anmeldetag: 27.07.2009
(51) Int. Cl.: B60R 13/02

(54) **Verbundteil zur Verkleidung von Kraftfahrzeuginnenräumen**
Composite part for lining a motor vehicle interior
Pièce composite pour l'habillage d'intérieurs de véhicules automobiles

(30) Priorität: 18.03.2009 DE 102009013862; 18.03.2009 DE 102009013863
(43) Veröffentlichungstag der Anmeldung: 22.09.2010
(73) Patentinhaber: Faurecia Innenraum Systeme GmbH, 76767 Hagenbach (DE)
(72) Erfinder: Schäfer, Frank, 76872 Steinweiler (DE); Bradfisch, Karsten F., 66955 Pirmasens (DE); Reiss-Seifried, Heike, 76437 Rastatt (DE)
(74) Vertreter: Pfenning, Meinig & Partner mbB

(56) Entgegenhaltungen:
- DE-A1-102004 053 133
- US-A1- 2007 193 198
- US-A1- 2008 217 943

## Beschreibung

Gegenstand der Erfindung ist ein Verfahren zur Herstellung eines Verbundteils sowie ein Verbundteil mit einer ersten Haut, einer zweiten Haut und einem mit der ersten und zweiten Haut mittels jeweils einer Naht verbundenen Halteprofil.

Entsprechend dem Stand der Technik besteht, insbesondere bei höherwertigen Kraftfahrzeugen, der Bedarf, Oberflächenbezüge aus hochwertigen Materialien wie etwa Leder zur Verkleidung des Innenraums zur Verfügung zu stellen. Ein derartiger Oberflächenbezug ist beispielsweise aus der gattungsbildenden DE 10 2004 053 133 A1 bekannt.

Der dort vorgestellte Überzug weist eine erste und eine zweite Haut auf, welche mittels einer Funktionsnaht miteinander verbunden sind. Die miteinander verbundenen ersten und zweiten Häute sind zusätzlich mittels Ziernähten mit einem Halteprofil vernäht, wobei das Halteprofil einen an der Unterseite des Halteprofils angeordneten Zapfen aufweist. Das aus den Häuten und dem Halteprofil bestehende Verbundteil wird mit einem Träger verbunden, wobei der Zapfen des Halteprofils in eine Ausnehmung des Trägers eingreift. Nachteilig an dem dort vorgestellten Verbundteil ist, dass die erste und zweite Haut vor dem Einbringen der Ziernähte mithilfe beispielsweise eines Klebeprozesses mit dem Halteprofil verbunden werden müssen. Zudem sind zur Ausrichtung der Position der ersten und zweiten Naht bzw. der Funktionsnaht auf dem Halteprofil Nahtschwerter notwendig, welche unter hohem Aufwand nach CAD-Daten gefräst werden müssen. Zudem gestaltet sich die korrekte Positionierung der ersten und zweiten Haut vor dem Einbringen der Ziernähte und vor dem stoffschlüssigen Verbinden mit dem Halteprofil als schwierig.

Eine Weiterbildung findet sich in der EP 1 816 018 A1. Das dort offenbarte Verbundteil weist zumindest eine erste und eine zweite mit der ersten verbundene Haut auf, welche jeweils mit einem Halteprofil verbunden werden. Das Halteprofil weist im Wesentlichen senkrecht zur Naht verlaufend zahnartige Profilierungen auf, welche beim Verbinden der ersten bzw. der zweiten Haut mit dem Halteprofil dieses hintergreifen und ein vorhergehendes stoffschlüssiges Verbinden zwischen der ersten bzw. zweiten Haut und dem Halteprofil entfallen kann. Dies hat den Vorteil, dass die Nähte bei Fehlstellungen wieder aufgetrennt werden können. Eine stoffschlüssige Verbindung zwischen dem Halteprofil und der ersten bzw. zweiten Haut wird erst nach dem Vernähen der ersten bzw. zweiten Haut mit dem Halteprofil vorgenommen. Nachteilig an der in der EP 1 816 018 A1 vorgestellten Lösung zum Verbinden einer ersten und einer zweiten Haut mit einem Halteprofil ist es, dass zur Positionierung der ersten und zweiten Haut auf dem Halteprofil weiterhin ein Nahtschwert notwendig ist. Zudem ist die präzise Justage des Nahtverlaufs auf dem Halteprofil schwierig.

Aufgabe der vorliegenden Erfindung ist es, ein Verfahren zur Herstellung eines Verbundteils sowie ein Verbundteil zu verbessern, so dass die aufgeführten Nachteile vermieden werden.

Die Erfindung wird mithilfe des Verfahrens nach Anspruch 1 sowie eines Verbundteils nach Anspruch 14 gelöst.

Verschiedene Ausführungsformen werden in den untergeordneten Ansprüchen und den Ausführungsbeispielen aufgeführt.

Das erfindungsgemäße Verbundteil weist ein Halteprofil mit einer sich in einer ersten Richtung erstreckenden Nut auf, wobei jeweils ein Endabschnitt einer ersten und ein Endabschnitt einer zweiten Haut in der Nut angeordnet sind. Der Endabschnitt der ersten Haut und der Endabschnitt der zweiten Haut werden zunächst in diese sich in einer ersten Richtung erstreckende Nut des Halteprofils eingeführt. Die erste Richtung wird durch den Verlauf der Naht bestimmt, d.h. falls das Halteprofil gekrümmt wird, wird auch die erste Richtung "gekrümmt".

Die "Nut" muss in ihrer endgültigen Einbauform in diesem Fall keinen geschlossenen Nutgrund aufweisen. Insbesondere bei der Ausführungsform, bei der die Endabschnitte zusammen mit einem Teil der Nut gekürzt werden, kann die Nut in ihrer Einbauform praktisch aus zwei zueinander im Wesentlichen parallelen Strängen bestehen, die die Endabschnitte entsprechend zusammenpressen.

Mithilfe der Nut können die Endabschnitte der ersten und zweiten Haut gehalten und geführt werden, wodurch die eigentliche Positionierung der ersten und zweiten Haut auf dem Halteprofil selbst stark vereinfacht wird. Die Nut erstreckt sich dabei vorzugsweise über die gesamte Länge des Halteprofils in der ersten Richtung.

Anschließend werden die Endabschnitte der ersten und/oder zweiten Haut oder ein an den Endabschnitt anschließender Teilabschnitt der ersten Haut und/oder ein an den Endabschnitt anschließender Teilabschnitt der zweiten Haut mittels einer mindestens ein Garn umfassenden ersten Funktionsnaht in der Nut mit dem Halteprofil verbunden.

Durch eine die erste und/oder zweite Haut verbindende und auf der Höhe der Nut angeordnete erste Funktionsnaht wird der aus der ersten und zweiten Haut gebildete Überzug fest mit dem Halteprofil verbunden. Anschließend kann das Halteprofil, welches mit oder ohne Flügel ausgebildet sein kann, mit den verbundenen Häuten beispielsweise auf einem Träger angeordnet werden, wobei das Halteprofil mit dem Träger formschlüssig oder stoffschlüssig verbunden wird. Anschließend können die Häute auch ohne eingebrachte Zier- oder Dekornähte auf den Träger kaschiert werden. Der Verlauf der Naht ist durch die erste Funktionsnaht, das Halteprofil und einer zum Halteprofil korrespondierenden Ausnehmung vorgegeben. Dabei ist es bevorzugt, wenn das Halteprofil flexibel oder krümmbar ist und sich so an den Verlauf der Ausnehmung des Trägers anpasst.

Weitere Ausführungsformen können den untergeordneten Ansprüchen entnommen werden.

In einer Ausführungsform der Erfindung hintergreift die erste Funktionsnaht mindestens eine Seitenwand der Nut des Halteprofils. Hierdurch wird eine formschlüssige Verbindung zwischen der ersten und/oder zweiten Haut und dem Halteprofil hergestellt. Prozesstechnisch ist es besonders einfach, wenn die erste Funktionsnaht zwei sich gegenüberliegende und die Nut begrenzende Seitenwände hintergreift, wobei die erste und die zweite Haut durch die erste Funktionsnaht zumindest punktuell durchstoßen werden.

In einer weiteren Ausführungsform weist das Verbundteil eine zweite die erste und zweite Haut verbindende Funktionsnaht auf, welche von einer Sichtseite des späteren auf einen Träger angeordneten Verbundteils oberhalb der ersten Funktionsnaht angeordnet ist. Oberhalb bedeutet hierbei, dass die zweite Funktionsnaht von der Sichtseite her betrachtet näher liegt als die erste Funktionsnaht. Die zweite Funktionsnaht ist für den Betrachter sichtbar angeordnet und wird von einem Betrachter als die eigentliche die erste und zweite Haut verbindende Funktionsnaht wahrgenommen, da die unterhalb dieser zweiten Funktionsnaht liegende erste Funktionsnaht von der zweiten Funktionsnaht überdeckt wird. Die erste und die zweite Funktionsnaht können im Wesentlichen gleichzeitig oder innerhalb eines einzigen Arbeitsgangs eingebracht werden, was den Arbeitsaufwand reduziert.

Erfindungsgemäß werden die erste und die zweite Haut mit einer zwischen dem Teilabschnitt und dem Endabschnitt angeordneten Funktionsnaht miteinander verbunden, wobei die Verbindung vor dem Einführen der Endabschnitte in die Nut hergestellt wird. Hierdurch kann insbesondere die Zeit, welche zum Einbringen der ersten und zweiten Haut in die Nut benötigt wird, reduziert werden. Die Funktionsnaht kann von der Sichtseite betrachtet oberhalb oder unterhalb der ersten Funktionsnaht eingebracht werden. Liegt die Funktionsnaht oberhalb der ersten Funktionsnaht und ist eine zweite Funktionsnaht vorhanden liegt die Funktionsnaht zwischen der ersten und zweiten Funktionsnaht.

In einer weiteren Ausführungsform weist das Halteprofil mindestens einen, vorzugsweise zwei, Flügel auf, welche sich vorzugsweise an die Seitenwände der Nut anschließen und sich gegenüberliegen. Der mindestens eine Flügel des Halteprofils dient der Verbindung zwischen einem an den Endabschnitt anschließenden Teilabschnitt der ersten bzw. zweiten Haut mit einem ersten bzw. zweiten des mindestens einen Flügels des Halteprofils mittels einer ersten bzw. zweiten Naht. Die erste und zweite Naht umfassen dabei zumindest ein Garn. Dies bedeutet insbesondere, dass die Verbindung zwischen dem Endabschnitt der ersten bzw. zweiten Haut und dem ersten bzw. zweiten Flügel derart ist, dass mindestens ein Garn den ersten bzw. zweiten Flügel von einer Sichtseite der ersten bzw. zweiten Haut aus betrachtet zumindest abschnittsweise hintergreift. Bei der ersten und zweiten Naht handelt es sich bevorzugt um Dekor- oder Ziernähte.

Das Vorhandensein zweier Flügel ist lediglich dann notwendig, wenn eine erste bzw. zweite Naht auf beiden Seiten der Verbindungsstelle der ersten und zweiten Haut eingebracht werden soll.

Da die Endabschnitte der ersten und zweiten Haut jeweils in der Nut geführt bzw. gehalten sind, muss lediglich eine Lage der ersten bzw. zweiten Haut mit dem ersten bzw. zweiten Flügel vernäht werden. Dies reduziert die Menge des zu verwendenden Materials der ersten und zweiten Haut. Des Weiteren wird die zum Einbringen der Naht aufzuwendende Kraft verringert, da lediglich eine Lage der ersten bzw. zweiten Haut durchstoßen werden muss.

Es bedarf keines vorherigen Verklebens zwischen dem Halteprofil und der ersten bzw. zweiten Haut. Auch das Mitnähen eines Nahtbandes, wie in vorhergehenden Verfahren erforderlich, kann entfallen. Aufgrund der Tiefe und der Breite der Nut können die erste bzw. zweite Haut beispielsweise leicht eingeklemmt oder locker in der Nut gehalten werden. Hierdurch ist es möglich, die Form bzw. die Optik der von der Sichtseite der ersten bzw. zweiten Haut sichtbaren Verbindungsstelle zwischen der ersten und zweiten Haut beeinflusst werden.

Bevorzugt weisen die Endabschnitte der ersten bzw. zweiten Haut eine Länge von 0,5 mm bis 3 mm auf. In einer weiteren Ausführungsform weist die Nut eine Tiefe zwischen 1 mm und 4 mm, vorzugsweise zwischen 1,2 mm und 2,5 mm, auf und kann die Endabschnitte und die Funktionsnaht aufnehmen, ohne dass die Endabschnitte den Boden der Nut berühren. Hierdurch werden Aufwellungen der ersten und zweiten Haut im Bereich der Nut vermieden. Die Endabschnitte können jedoch auch derart in die Nut eingeführt sein, dass einer oder beide Endabschnitte am Boden der Nut aufliegen.

In einer weiteren Ausführungsform, insbesondere in Hinblick auf die industrielle Herstellung eines erfindungsgemäßen Verbundteils, wird das Halteprofil in einer Stichplatte einer Nähvorrichtung geführt und/oder gehalten. Die Stichplatte weist dabei einen sich in der ersten Richtung erstreckenden Kanal zur Führung des Halteprofils auf. Die Nähvorrichtung weist zudem zwei Nadeln auf, wobei sich der Kanal zur Führung des Halteprofils zwischen den zwei Nadeln erstreckt. Die erste Nadel bringt die erste Funktionsnaht ein, wohingegen die zweite Nadel die zweite Funktionsnaht einbringt. Bevorzugt hintergreift lediglich die erste Funktionsnaht die Seitenwände der Nut. Die zweite Funktionsnaht hintergreift dementsprechend nur die erste und zweite Haut. Die zweite Nadel wird dazu in einem geringen Abstand von vorzugsweise weniger als 2mm an der offenen Seite der Nut entlang geführt.

Mithilfe der vorgenannten Stichplatte kann die Prozessgeschwindigkeit zum Herstellen eines Verbundteils aus einer ersten und zweiten Haut, welche mit einem Halteprofil über mindestens eine in der Nut angeordnete erste Funktionsnaht deutlich erhöht werden, wobei die vorgegebenen Toleranzwerte wie oben beschrieben eingehalten werden können. Optional kann zeitnah oder zeitgleich eine zweite Funktionsnaht mittels einer zweiten Nadel eingebracht werden.

In einer weiteren Ausführungsform überragt die erste und zweite mit dem Halteprofil verbundene Haut das Halteprofil in der ersten Richtung. Dies bedeutet, dass das Halteprofil kürzer ist als die zwischen der ersten und zweiten Haut entstehende Verbindungslinie, wobei die Verbindungslinie vorzugsweise durch eine Funktionsnaht gegeben ist. Hierdurch wird es beim späteren Anordnen des Verbundteils auf einem Träger leichter, die das Halteprofil überragenden Randbereiche der ersten und zweiten Haut mit dem Träger entsprechend zu verbinden. Um beim Verfahren zur Herstellung des Verbundteils das Überragen der ersten und zweiten Haut zu gewährleisten, werden zunächst die erste und zweite Haut derart in ein erstes Ende des Halteprofils eingeführt, dass die erste und zweite Haut das erste Ende bereits zu Beginn eines Nähvorgangs überragen. Anschließend wird das Halteprofil beispielsweise in eine erfindungsgemäße Nähvorrichtung eingelegt und eine erste und zweite Naht zur Verbindung des Halteprofils mit der ersten und zweiten Haut eingebracht.

In einer weiteren Ausführungsform wird nach dem Verbinden der Teilabschnitte der ersten und zweiten Haut mit dem Halteprofil dieses in eine Ausnehmung eines Trägers derart eingesetzt, dass die erste und zweite Naht von der Sichtseite her sichtbar sind und das Halteprofil formschlüssig und/oder stoffschlüssig mit dem Träger verbunden wird. Beispielsweise ist es möglich, die der Innenseite der Nut abgewandte Unterseite des Halteprofils mit einem Kleber zu versehen und so eine stoffschlüssige Verbindung mit dem Träger herbeizuführen. Andererseits ist es auch möglich, das Halteprofil in eine entsprechende Ausnehmung des Trägers einzuklipsen.

Dabei weist das Halteprofil vorzugsweise an einer dem Träger zugewandten Unterseite einen Zapfen auf, wobei der Zapfen in die Ausnehmung des Trägers eingreift und vorzugsweise mindestens einen Anker zur verbesserten Halterung des Halteprofils aufweist. Mithilfe eines Ankers kann eine verbesserte formschlüssige Klemmwirkung des Zapfens in der Ausnehmung des Trägers erreicht werden. Hierbei ist es möglich, dass die Ausnehmung des Trägers gestuft ist, d. h. eine erste Stufung das eigentliche Halteprofil aufnimmt und die zweite weiter in den Träger ragende Stufung den Zapfen aufnimmt.

In einer weiteren Ausführungsform weisen die mindestens zwei Flügel des Halteprofils eine Vielzahl von Zähnen und/oder Schlitzen auf. Hierbei verlaufen die Zähne bzw. die Schlitze der Flügel quer zur ersten Richtung der Nut. Aufgrund der Schlitze bzw. der Zähne ist es möglich, das Halteprofil entsprechend leicht zu krümmen, wobei Krümmungsradien bis zu 30 mm möglich sind. Hierdurch kann auf einfache Weise ein komplizierter Nahtverlauf, welcher Krümmungen aufweist, erstellt werden. Die Geometrie des Nahtverlaufs wird dabei durch den Zuschnitt der ersten und zweiten Haut vorgegeben.

Es ist bevorzugt, wenn das Halteprofil aus einem vorzugsweise extrudierten Kunststoff besteht und eine Shore-Härte zwischen 25 und 100, vorzugsweise zwischen 40 und 70, aufweist. Ein aus einem dementsprechenden Kunststoff hergestelltes Halteprofil weist die notwendige Weichheit zum Erstellen komplizierter gekrümmter Nahtverläufe auf. Zudem ist es mittels des Extrusionsverfahrens möglich, beliebig lange Halteprofile herzustellen, wobei die erste Richtung des Halteprofils im Wesentlichen mit der Extrusionsrichtung übereinstimmt.

Besonders bevorzugt werden als erste und/oder zweite Haut Materialien wie Leder, Kunstleder, Kunststoffe wie z. B. Alcantara oder Gewebe oder Gewirke verwendet. Als Träger kommen Träger mit einem Abstandsgewirke, frontgeschäumte Träger oder hartkaschierte Träger aus Kunststoffen oder Gewirken in Frage, wobei der Träger eine das Halteprofil aufnehmende Schiene aufweisen kann.

Eine besonders vorteilhafte Weiterbildung sieht vor, dass das Halteprofil und/oder Teile der Endabschnitte in einem definierten Abstand zum Verlauf der ersten Funktionsnaht gekürzt werden.

Dieses Kürzen kann parallel zum Einbringen von Funktionsnähten oder auch nachfolgend erfolgen.

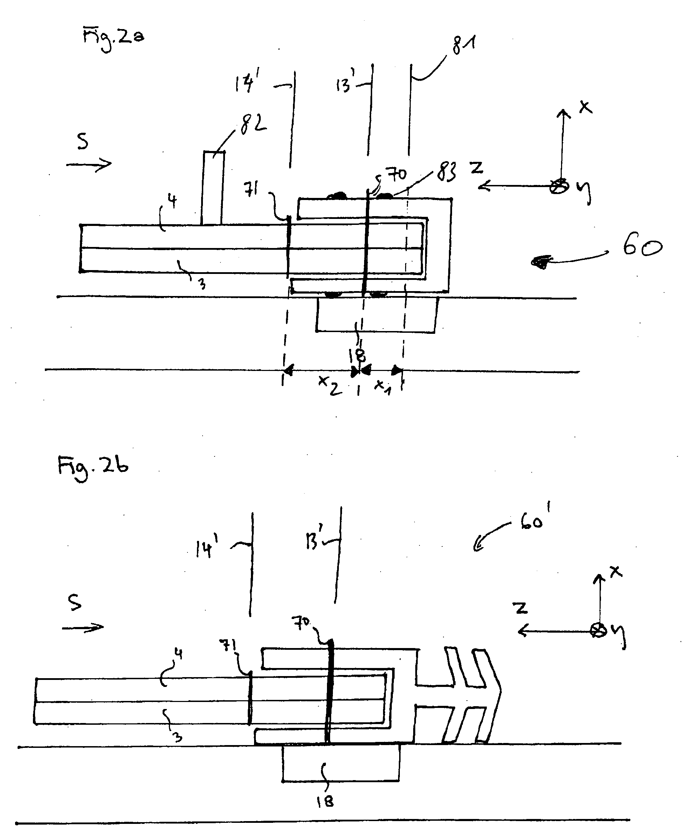

In einer bevorzugten Ausführungsform wird, wie in Fig. 2a gezeigt, ein Bauteil, welches zwei aufeinanderliegende Endabschnitte aufweist, die in einer Nut eines Halteteils untergebracht sind, durch eine Nähmaschine geführt.

Diese Nähmaschine ist so gestaltet, dass sie eine Stichplatte aufweist mit einem Transporteur zum Weitertransport des Bauteils beim Nähen. Außerdem kann zusätzlich (oder alternativ zu einem Transporteur) ein Transportrad vorgesehen sein.

Essentiell ist jedoch, dass zumindest eine Nadel vorgesehen ist, die das Halteteil mit den beiden Endabschnitten verbindet. Parallel zu dieser Naht wird dann ein Schnittmesser geführt (s. auch Fig. 2a), damit in einem definierten Abstand zur Funktionsnaht ein gerader Abschluss gegeben ist. Hierdurch wird zum einen erreicht, dass ein glatter Abschluss gegeben ist, außerdem wird sichergestellt, dass auf jeden Fall die Endabschnitte sowie das Halteteil miteinander verbunden sind, so dass es hier nicht zu Ablösungen kommen kann. Der Abstand von der Schnittkante (parallel zur Naht gesehen) kann hierbei sehr klein sein (beispielsweise im Bereich zwischen 0,8 und 5 mm, vorzugsweise zwischen 0,9 und 3 mm, besonders vorzugsweise zwischen 1 und 2 mm).

Eine entsprechende Nähmaschine würde also enthalten: mindestens eine Nadel zum Einbringen jeweils einer Naht sowie einer Stichplatte zum Führen eines zu erstellenden Verbundteils, wobei die Nähvorrichtung eine Nadel aufweist zur Verbindung eines Halteteils einerseits mit zwei Enden eines Dekorteils andererseits. Zum Transport kann hierbei ein Rad gegeben sein, welches auf dem oberen der beiden Endabschnitte abrollt, alternativ ein Transporteur (dies bevorzugt bei Ausführungsvarianten, bei denen die Halteelemente und/oder die Endabschnitte noch "Flügel" haben).

Diese Ausführungsform des Verbundteils hat Vorteile, da das Ende des Retainers (Haltemittels) während des Nähprozesses bzw. nachfolgend beschnitten wird, um eine exakte Gesamthöhe zu erreichen. Hierdurch ergibt sich eine maßmäßig exakte und außerdem gerade und fluchtende Positionierung in einem entsprechenden Träger. Hierdurch wird einerseits das äußere Erscheinungsbild eines späteren Verbundteils sehr ansehnlich. Insbesondere wird allerdings auch die Gesamthöhe beschränkt bzw. kommt es nicht notwendigerweise zu einer Erhöhung im Bereich der Naht, so dass entsprechend Bauraum gespart werden kann.

In einer weitergehenden Ausführungsform kann noch eine zweite Naht vorgesehen sein, und zwar auf der von dem Beschnitt abweisenden Seite. Diese Naht verbindet lediglich zwei Endabschnitte kurz oberhalb bzw. fluchtend mit einer Oberkante des Haltemittels. Diese Naht hat die Aufgabe, eine Funktionsnaht sichtbar zu machen und den optischen Eindruck der Funktionsnaht zu wahren. Es würde auch ausreichen, lediglich nur die dem Beschnitt nähere Naht vorzusehen, allerdings würde dann das optische Nahtbild nicht mehr sichtbar sein. Mit dieser neuen Technologie wird ein Toleranzfeld von +/-0,5 mm erreicht. Besondere Vorteile liegen darin, dass die Ausschussrate geringer wird, enge Radien (Biegungen in der Nahtlängsachse mit bis zu weniger als r = 20 mm Krümmungsradius) sind möglich. Konkave und konvexe Bereiche sind ebenfalls möglich, das Profil ist universell anwendbar bei Verbundteilen, die schubweich sind (Abstandsgewirke), frontgeschäumten Trägern bzw. hartkaschierten Trägern.

Zusammengefasst kann also gesagt werden, dass insbesondere bei begrenztem Bauraum bzw. begrenzter Tiefe der Nut von entsprechenden Trägern diese vorteilhafte Variante sinnvoll ist. Dasselbe gilt zur Minimierung von auftretenden Toleranzschwankungen durch die Positionierung der Beschnitte im Nähprozess durch den jeweiligen Bearbeiter.

Als Lösungsansatz wird also zum Toleranzausgleich der Zuschnittspositionierung durch die Beschnitteinrichtung ein festes Maß ausgeglichen / korrigiert. Der Verbund aus Profil (Keder) / Dekormaterial wird im Bereich der Naht auf ein fest definiertes Längenmaß limitiert. Hierbei kann auch ein Anbringen einer Dipper-/ Wellenstruktur an den der Nut anliegenden Seiten des Profils / Keder gegeben sein.

Die Anbringung der Naht bzw. des Beschnittes kann sowohl mit einer Nähvorrichtung als Säulenmaschine oder auch als Flachbettmaschine gegeben sein.
Nachfolgend soll die Erfindung anhand einiger Ausführungsbeispiele genauer erläutert werden. Die im Rahmen der verschiedenen Ausführungsbeispiele offenbarten einzelnen Merkmale können zu weiteren Ausführungsbeispielen miteinander kombiniert werden. Es zeigen:
- Fig. 1a, 1b: Ausführungsformen eines Verbundteils;
- Fig. 2a, 2b: einfache Ausführungsformen eines Verbundteils;
- Fign. 3a, 3b: weitere Ausführungsformen eines Verbundteils;
- Fign. 4a-c: Ausführungsformen eines Halteprofils;
- Fign. 5a-c: verschiedene Ansichten eines Halteprofils und einer Nähvorrichtung;
- Fig. 6: Ansicht der Unterseite einer Ausführungsform eines Verbundteils.

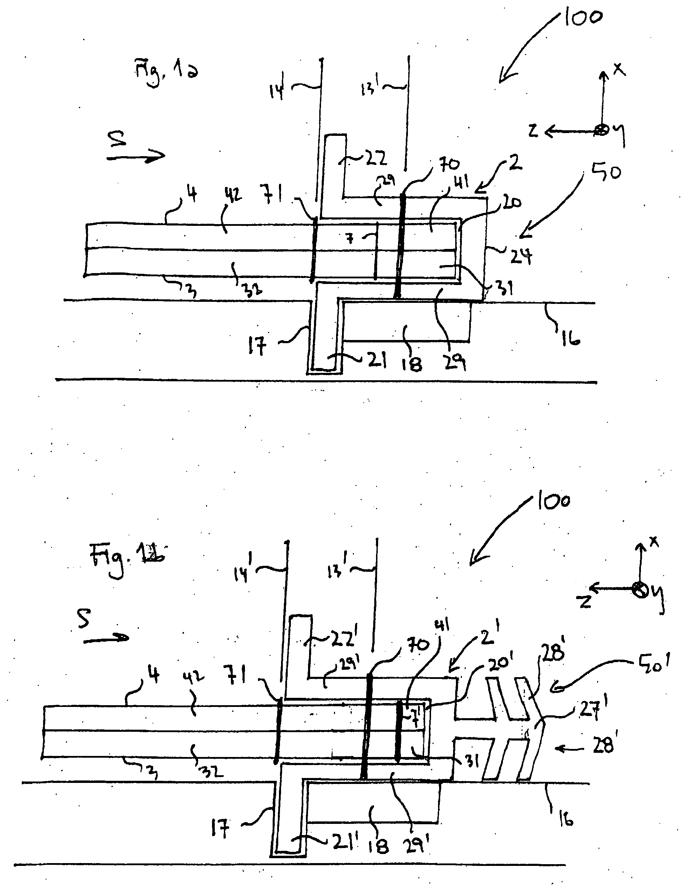

Die Fig. 1a zeigt ein Verbundteil 50, welches mit Hilfe einer Nähvorrichtung 100 hergestellt wird. Das Verbundteil 50 umfasst eine erste Haut 3, eine zweite Haut 4 sowie ein Halteprofil 2. Das Halteprofil weist eine Nut 20 auf, welche durch Seitenwände 29 und eine als Boden dargestellte Unterseite 24 begrenzt ist. Die Nut erstreckt sich in einer ersten Richtung, welche vorliegend durch die y-Richtung gegeben ist.

Die erste Haut 3 und die zweite Haut 4 werden vor dem Einführen der Endabschnitte 31, 41 in die Nut 20 mittels einer Funktionsnaht 7 miteinander verbunden. Die Funktionsnaht 7 wird durch das Vernähen eines Garns eingebracht und definiert die rechts der Funktionsnaht 7 liegenden Endabschnitte 31, 41 und die links der Funktionsnaht 7 liegenden Teilabschnitte 32, 42. Die Funktionsnaht 7 hilft beim Einführen der ersten und zweiten Haut und ist optional zur ersten Funktionsnaht 70 und zur zweiten Funktionsnaht 71.

Das Halteprofil 2 weist zudem zwei an die Seitenwände 29 anschließende und jeweils einen ersten Flügel 21 und einen dem ersten Flügel 21 gegenüberliegenden zweiten Flügel 22 auf. Zum Einbringen der ersten Funktionsnaht 70 und der zweiten Funktionsnaht 71 wird das Halteprofil mit den in der Nut eingebrachten Häuten 3, 4 mittels einer Stichplatte 16 geführt und gehalten. Um das Halteprofil 2 zu bewegen weist die Nähvorrichtung 100 einen an der Stichplatte 16 angeordneten Transporteur 18 auf.

Die Stichplatte 16 weist einen Kanal 17 zur Führung eines Flügels des Halteprofils auf. In der Fig. 1a wird der erste Flügel 21 im Kanal 17 geführt. Das mittels des Transporteurs 18 geführte Halteprofil wird in den Bereich einer ersten Nadel 13' und einer zweiten Nadel 14' der Nähvorrichtung 100 geführt, wobei die erste Nadel 13' zum Einbringen der ersten Funktionsnaht 70 und die zweite Nadel 14' zum Einbringen der zweiten Funktionsnaht 71 ausgebildet ist.

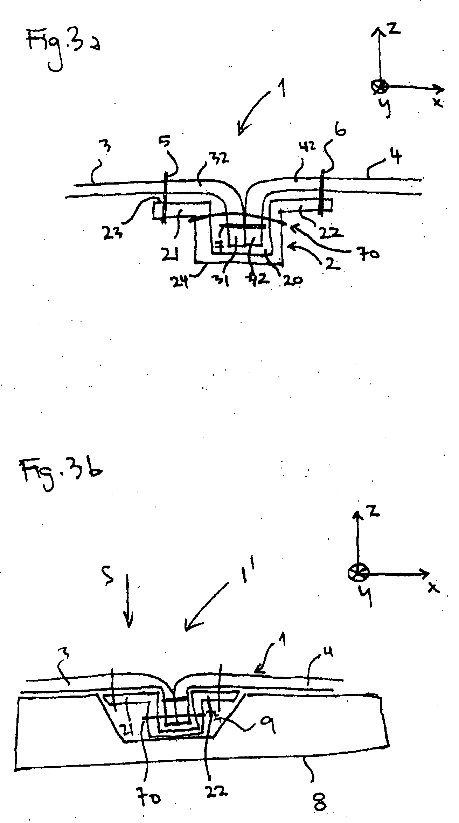

Die mittels der ersten Nadel 13' eingebrachte erste Funktionsnaht 70 hintergreift die zwei Seitenwände 29 und durchstößt die erste Haut 3 und die zweite Haut 4 punktuell, welche somit sicher in der Nut 20 gehalten sind. Die zweite Nadel 14' wird in geringem Abstand von weniger als 1mm zur offenen in der x-Richtung verlaufenden Seite der Nut geführt und verbindet lediglich die erste und zweite Haut mittels der zweiten Funktionsnaht 71, welche von der Sichtseite S aus betrachtet sichtbar ist. Obgleich das Halteprofil 2 die Flügel 21, 22 aufweist, ist es nicht notwendig die Teilabschnitte der Häute mit den entsprechenden Flügeln zu verbinden. Auch die Flügel sind lediglich optional. In den Figuren 3 und folgende wird auf das Einbringen von Ziernähten eingegangen.

Das in der Fig. 1b dargestellte Verbundteil 50' unterscheidet sich vom Verbundteil 50 lediglich durch die Verwendung eines anderen Halteprofils 2', welches einen an der Unterseite angeordneten Zapfen 27' mit Ankern 28' aufweist. Des Weiteren ist die optionale Funktionsnaht 7 unterhalb der ersten Funktionsnaht 70 eingebracht.

In den Fign. 2a und 2b sind zwei einfache Ausführungsformen eines erfindungsgemäßen Verbundteils dargestellt. Im Vergleich zu den Ausführungsbeispielen der Fign. 1a und 1b weisen die Verbundteile der Fign. 2a und 2b keine Flügel auf und sind zudem ohne die optionale Ziernaht 7 hergestellt worden. Das Verbundteil 60 der Fig. 2a bzw. das Verbundteil 60' der Fig. 2b kann direkt nach dem Einbringen der ersten und zweiten Funktionsnaht mit einem Träger verbunden werden. Aufgrund der fehlenden Flügel kann die Stichplatte der Nähvorrichtung ohne Kanal zur Führung eines Flügels ausgebildet sein. Der Transporteur führt das mit einer Seitenwand auf der Stichplatte aufliegende Halteprofil zu den beiden Nadeln zum Einbringen der ersten und zweiten Funktionsnaht. Entsprechende Details können den Ausführungsbeispielen der Fign. 1 entnommen werden.

In Fig. 2a ist beispielhaft außerdem eine Vorrichtung zum Beschneiden des Verbundteils 60 vorgesehen. Hierbei kann, gleichzeitig oder nachfolgend mit dem Einbringen einer Naht mithilfe der Nadel 13', ein Beschnitt mit einem Beschnittmesser 81 erfolgen. Alternativ und/oder zusätzlich zum Transporteur 18 kann hierbei ein Radtransport mittels eines Rades 82 vorgesehen sein. Außerdem sind ggf. Positionierelemente 83 vorzusehen, welche eine Ausrichtung bzw. ein Einschnappen in einen Träger ermöglichen. Hierdurch wird eine sehr geringe Bautiefe (in z-Richtung) eines späteren Innenverkleidungsteils gewährleistet. Vorliegend beträgt der Abstand x1 1,3 mm, der Abstand x2 3 mm. Die zweite Naht 71 ist eigentlich nicht notwendig, sie dient primär der Sichtbarmachung der Funktionsnaht, die eigentliche Haltefunktion wird aber schon von der Funktionsnaht 70 übernommen.

Es sei betont, dass für sämtliche der hier gezeigten Ausführungsformen ein Beschnitt des Verbundteils / der Haltevorrichtung möglich ist. Dies gilt insbesondere für die Ausführungsform von Fig. 1a zusätzlich zu der hier gezeigten Ausführungsform von Fig. 2a.

Die Fig. 3a zeigt ein Verbundteil 1, welches nach einer Variante des erfindungsgemäßen Verfahrens hergestellt wurde. Das Verbundteil 1 weist das Halteprofil 2, die erste Haut 3, die zweite Haut 4 sowie eine erste Naht 5 und eine zweite Naht 6 auf. Die erste Naht 5 und die zweite Naht 6 werden nachfolgend als Ziernähte bezeichnet. Weiterhin ist eine die erste Haut 3 und die zweite Haut 4 verbindende Funktionsnaht 7 gezeigt.

Nachdem die Endabschnitte 31 bzw. 41 in die Nut 20 eingeführt worden sind, werden die erste Naht 5 bzw. die zweite Naht 6 eingebracht, wodurch eine Verbindung zwischen der ersten Haut 3 und dem ersten Flügel 21 bzw. der zweiten Haut 4 und dem zweiten Flügel 22 hergestellt wird. Bei der Naht handelt es sich um eine Naht aus Garn, welche den jeweiligen Flügel jeweils zumindest abschnittsweise hintergreift. Bei dem in der Fig. 3a gezeigten Ausführungsbeispiel durchstößt eine die erste bzw. zweite Naht einbringende Nadel einer Nähvorrichtung den ersten Flügel 21 bzw. den zweiten Flügel 22, so dass die jeweilige Naht den jeweiligen Flügel zumindest abschnittsweise hintergreift. Eine vorhergehende stoffschlüssige Verbindung zwischen der ersten und zweiten Haut und dem Halteprofil 2 ist nicht notwendig, kann jedoch vorhanden sein.

Bevor die Endabschnitte 31 bzw. 41 in die Nut 20 eingeführt werden, wurde die Funktionsnaht 7 eingebracht und anschließend mithilfe eines Schnittwerkzeuges die Endabschnitte 31 bzw. 41 auf eine Länge von 1 mm gekürzt. Die Endabschnitte 31, 41 sind dabei derart gekürzt, dass diese den Boden der Nut nicht berühren. So dass keine Aufwölbung sichtbar ist. Anschließend wird die erste Funktionsnaht 70 wie in der Beschreibung der Fign. 1 und 2 dargelegt eingebracht.

Das Verbundteil 1 der Fig. 3a weist jeweils nur eine einzige mit dem ersten Flügel 21 bzw. zweiten Flügel 22 verbundene Lage der ersten Haut 3 bzw. zweiten Haut 4 auf. Die Ansicht einer zweilagigen Haut im Bereich der Naht kann entweder durch einen Hautüberschuss oder eine entsprechende Ausführung des ersten und zweiten Flügels erreicht werden. Beispielsweise können sich die Flügel von der Nut weggerichtet verjüngen.

Aufgrund der in die Nut 20 eingeführten Endabschnitte 31 bzw. 41 ist ein Vorpositionierwerkzeug mit Nahtschwert nicht länger notwendig. Hierdurch werden die Positionierzeiten der ersten und zweiten Haut auf dem Halteprofil 2 deutlich verkürzt. Da vor dem Einbringen der Ziernähte 5 und 6 keine stoffschlüssige Verbindung zwischen dem Halteprofil 2 und der ersten Haut 3 bzw. zweiten Haut 4 besteht, kann bei einer Fehlstellung die Naht 5 bzw. 6 jederzeit wieder gelöst werden. Eine endgültige Verbindung zwischen dem Halteprofil und der ersten bzw. zweiten Haut kann nach dem Einbringen der Fugentemperatur durch die jeweilige Haut erzeugt werden. Üblicherweise erfolgt dies nach dem Presskaschieren oder dem Membrankaschieren des Verbundteils mit einem Träger.

In der Fig. 3b ist ein weiteres Verbundteil 1' gezeigt. Das Verbundteil 1' weist das Verbundteil 1 auf, welches auf einem Träger 8 angeordnet ist. Der Träger 8, welcher aus einem Kunststoff wie z.B. Polypropylen besteht, weist eine Ausnehmung 9 auf, welche zum Halteprofil 2 korrespondierend ausgebildet ist, so dass die Oberseite 23 des ersten Flügels 21 bzw. des zweiten Flügels 22 bündig mit der Oberseite des Trägers außerhalb der Ausnehmung 9 abschließt. Auf der Sichtseite S ist ein Übergang zwischen dem Träger 8 und dem Halteprofil 2 nicht sichtbar oder spürbar. Dies bedeutet insbesondere, dass die erste Haut 3 und die zweite Haut 4 z.B. keine Aufwellungen im Bereich zwischen der Ausnehmung 9 und der restlichen Oberseite des Trägers 8 aufweisen. Die Oberseite ist hierbei die der Sichtseite S zugewandte Seite des Trägers 8. Die erste Funktionsnaht 70 ist unterhalb der Funktionsnaht 7 angeordnet.

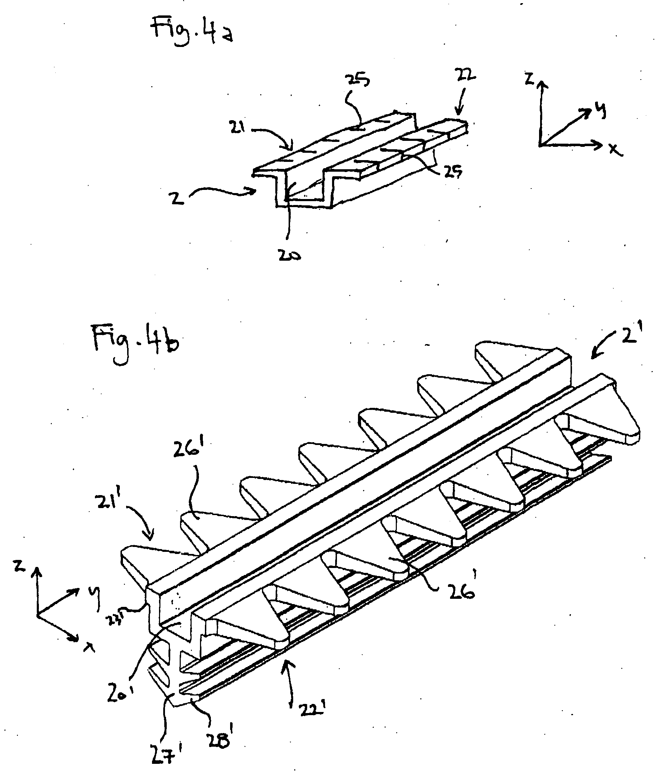

In der Fig. 4a ist das Halteprofil 2 in einer räumlichen Darstellung gezeigt. Zusätzlich zu den bereits erwähnten Merkmalen zeigen der erste Flügel 21 bzw. der zweite Flügel 22 jeweils entlang der x-Achse verlaufende Schlitze 25 auf. Durch das Einbringen der Schlitze 25 in die Flügel ist es besonders einfach, Krümmungen des aus einer ersten Haut und zweiten Haut gebildeten Überzugs zu folgen. Insbesondere können auch kleine Krümmungsradien realisiert werden. Obgleich die Nut 20 des Halteprofils 2 im Wesentlichen rechteckig ist, können auch andere Geometrien verwendet werden. So kann beispielsweise der in negativer z-Richtung liegende Boden der Nut 20 gerundet ausgebildet sein, bzw. die Seitenwände der Nut, welche sich entlang der z-Achse erstrecken, können schräg aufeinander zufallen, so dass die Nut eine Dreiecksform annimmt. Die Nut sollte dabei eine geometrische Form aufweisen, so dass eine eventuell eingebrachte Funktionsnaht 7 von der Sichtseite her weiterhin sichtbar ist.

Eine alternative Geometrie eines Halteprofils ist in der Fig. 4b dargestellt. Das Halteprofil 2' weist eine sich in einer ersten Richtung erstreckende Nut 20' auf, wobei die Nut 20' wiederum rechteckig ist. Des Weiteren weist das Halteprofil 2' zwei sich an die Seitenwände der Nut 20' anschließende Flügel 21' bzw. 22' auf, wobei die Flügel 21' bzw. 22' eine Vielzahl von Zähnen 26' aufweisen. Die Funktion der Zähne 26' kann mit der der Schlitze 25 verglichen werden. Es ist leicht ersichtlich, dass bei einer Krümmung des Halteprofils 2' in der xy-Ebene die aufgrund der Zähne 26' vorliegenden Aussparungen der Flügel 21' bzw. 22' zu einem vereinfachten Einbringen einer Krümmung führen. Wie aus der Darstellung der Fig. 4b weiter erkennbar ist, umfassen die Flügel 21' bzw. 22' auch Teile der Seitenwände der Nut 20', was insbesondere durch den Vorsprung 23' illustriert wird. Eine in einem Träger angeordnete Ausnehmung passt sich an die entsprechende Gestaltung der Unterseite des Halteprofils an.

An die dem Boden der Nut 20' abgewandte Seite des Halteprofils 2' schließt sich ein Zapfen 27' mit Ankern 28' an. Nachdem die erste und zweite Haut in die Nut 20' eingeführt worden sind und die Teilabschnitte der ersten und zweiten Haut mit dem ersten bzw. zweiten Flügel 21' bzw. 22' verbunden worden sind, wird das Halteprofil 2' derart in einen Träger eingesetzt, dass der Zapfen 27' mit den Ankern 28' in einer zweiten Stufe einer Ausnehmung eines Trägers verankert wird. Beim Einbringen der Nähte, welche den ersten Flügel 21' und den zweiten Flügel 22' hintergreifen, können auch die zwischen zwei Zähnen 26' gelegenen Bereiche der die Zähne 26' überdeckenden ersten bzw. zweiten Haut mit der Naht versehen werden, wobei sie dort die Flügel 21' bzw. 22' nicht hintergreifen. Die Verbindung wird lediglich durch das Durchstoßen und Hintergreifen bzw. das ausschließliche Hintergreifen der Zähne 26' in anderen Abschnitten gewährleistet.

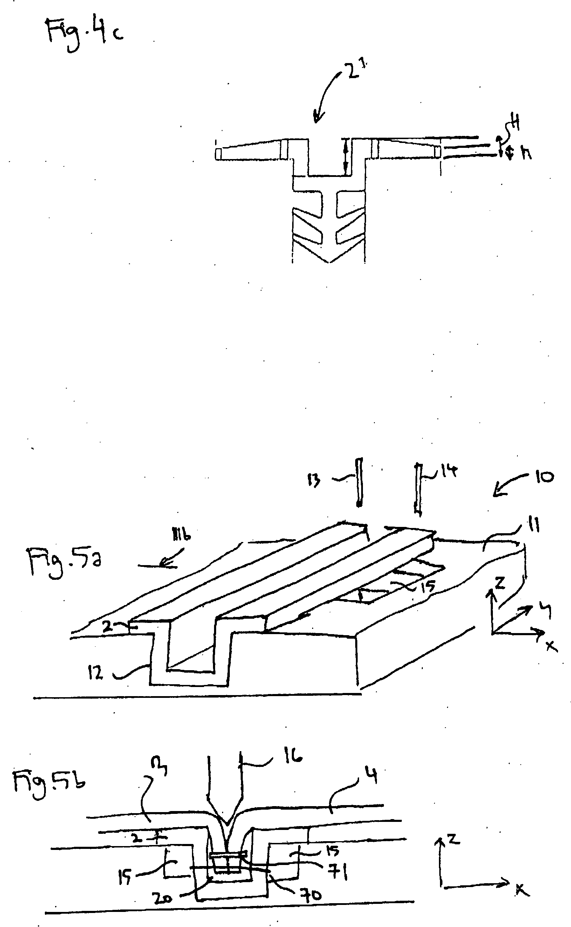

In der Fig. 4c ist das Halteprofil 2' im Querschnitt senkrecht zur ersten Richtung gezeigt. Es ist deutlich erkennbar, dass die Flügel von der Nut weggerichtet verjüngend von der Höhe H zur Höhe h zulaufen. Hierdurch wird beim Verbinden der ersten bzw. zweiten Haut für den Betrachter der Eindruck einer zweilagigen Haut erweckt. Das Halteprofil 2' ist für den Betrachter aufgrund der Überdeckung durch die erste und zweite Haut jedoch nicht sichtbar.

In den nachfolgenden Erläuterungen zu den Fign. 5a-c soll auf weitere Aspekte des Verfahrens, insbesondere in Verbindung mit einer Ausführungsform einer Nähvorrichtung zum Einbringen der Ziernähte in den ersten und/oder zweiten Flügel, eingegangen werden.

In der Fig. 5a ist eine Nähvorrichtung 10 gezeigt, welche eine Stichplatte 11, eine erste Nadel 13, eine zweite Nadel 14 sowie einen Transporteur 15 umfasst. Die Stichplatte 11 weist zudem einen Kanal 12 auf, in welchem beispielsweise das Halteprofil 2 gehalten und mithilfe des Transporteurs 15 geführt werden kann. Der Transporteur 15 transportiert das in dem Kanal 12 gehaltene Halteprofil 2 in Richtung der ersten und zweiten Nadel 13 bzw. 14. Das Halteprofil 2 wird derart im in z-Richtung geöffneten Kanal 12 angeordnet, dass die Nut ebenfalls in z-Richtung geöffnet ist, wobei die erste und zweite Nadel 13, 14 ebenfalls entlang der z-Richtung ausgerichtet sind. Die Flügel 21, 22 besitzen eine Breite entlang der x-Richtung und verlaufen ebenso wie die einzubringenden Nähte entlang der y-Richtung.

In der Fig. 5a ist lediglich das Halteprofil 2 ohne die erste und zweite Haut 3 bzw. 4 gezeigt. Das Vorhandensein der Häute wird in der Fig. 5b gezeigt. In der Fig. 5b, welche einen Schnitt IIIb durch das Verbundteil aus der Fig. 5a zeigt, sind das in dem Kanal 12 der Stichplatte 11 geführte Halteprofil 2 mit der noch nicht mit dem Halteprofil 2 verbundenen ersten Haut 3 bzw. zweiten Haut 4 gezeigt. Wie anhand der Fig. 5b erkennbar ist, werden die erste Haut 3 und die zweite Haut 4, welche mittels der Funktionsnaht 7 verbunden sind, mit einer Mittenführung 16 in der Nut 20 des Halteprofils 2 gehalten. Die so in der Nut 20 gehaltene erste Haut 3 und zweite Haut 4 wird mithilfe des Transporteurs 15 zusammen mit dem Halteprofil 2 in Richtung der ersten Nadel 13 bzw. der zweiten Nadel 14 gezogen. Mithilfe der ersten Nadel 13 bzw. zweiten Nadel 14 werden die dementsprechenden Nähte 5 bzw. 6 eingebracht.

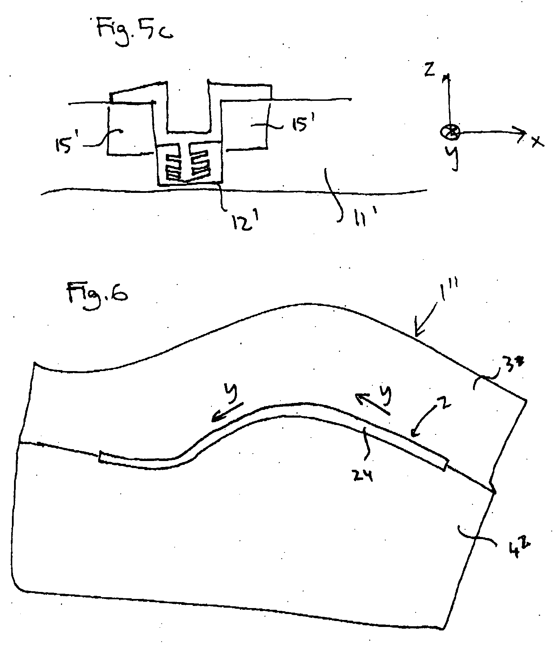

Eine alternative Ausführungsform einer Stichplatte ist in der Fig. 5c gezeigt. Hierbei ist die Stichplatte 11' ebenfalls im Querschnitt zur ersten Richtung y des Halteprofils 2' dargestellt. Das in den Fign. 2b und 2c dargestellte Halteprofil 2' weist, einen Zapfen 27' mit Ankern 28' auf. Dementsprechend ist der Kanal 12' zur Führung des Halteprofils 2' tiefer ausgebildet, so dass auch der Zapfen 27' in diesem gehalten wird ohne dass der erste Flügel 21' bzw. zweite Flügel 22' von der Oberfläche der Stichplatte 11' bzw. den Transporteuren 15' abgehoben wird, d.h. die Flügel 21, 22 an der Oberfläche der Stichplatte anliegen.

In der Fig. 6 ist die Rückseite, d. h. die nicht sichtbare Seite, einer Ausführungsvariante eines Verbundteils 1'' gezeigt. Es ist die Unterseite der ersten Haut 3, die Unterseite der ersten Haut 4 sowie die Unterseite 24 des Halteprofils 2 dargestellt. Es ist deutlich erkennbar, dass das Halteprofil 2 von dem Verbund der ersten Haut 3 und der zweiten Haut 4 in der ersten Richtung y, d. h. der Richtung des Verlaufs der Nut des Halteprofils 2, überragt wird. Das so hergestellte Verbundteil 1'' wird mit einem Träger verbunden, wobei der Träger eine dem geometrischen Verlauf des Halteprofils 2 des Verbundteils 1'' folgende Ausnehmung aufweist. Hierdurch wird die Nahtposition in Bezug auf den Träger bestimmt und der Ausschuss weiter verringert.

## Patentansprüche

1. Verfahren zur Herstellung eines Verbundteils (50; 50'; 60; 60';1; 1'; 1''), welches folgende Schritte umfasst:
a) Einführen eines Endabschnitts (31) einer ersten Haut (3) und eines Endabschnitts (41) einer zweiten Haut (4) in eine sich entlang einer ersten Richtung (y) erstreckenden Nut (20; 20') eines Halteprofils (2; 2') ;
b) Verbinden der Endabschnitte der ersten und/oder zweiten Haut (3, 4) oder eines an die jeweiligen Endabschnitte (31, 41) anschließenden Teilabschnitts (32, 42) der ersten und/oder zweiten Haut (3, 4) mit dem Halteprofil (2; 2'), wobei die erste und/oder zweite Haut (3, 4) mittels einer in der Nut (20; 20') angeordneten vorzugsweise mindestens ein Garn umfassenden ersten Funktionsnaht (70) mit dem Halteprofil (2; 2') verbunden wird,
**dadurch gekennzeichnet,**
**dass** die erste und die zweite Haut (3, 4) vor dem Einführen der Endabschnitte (31, 41) in die Nut (20; 20') mit einer zwischen einem Teilabschnitt (32, 42) und dem jeweiligen Endabschnitt (31, 41) angeordneten weiteren Funktionsnaht (7, 7') miteinander verbunden werden.

2. Verfahren nach Anspruch 1, **dadurch gekennzeichnet, dass** die Funktionsnaht eine Seitenwand (29; 29') der Nut (20; 20') des Halteprofils (2; 2') zumindest abschnittsweise hintergreift.

3. Verfahren nach einem der vorhergehenden Ansprüche, **dadurch gekennzeichnet, dass** eine von einer Sichtseite (S) der ersten und/oder zweiten Haut (3, 4) betrachtet oberhalb der ersten Funktionsnaht (70) liegende zweite mindestens ein Garn umfassende Funktionsnaht (71) eingebracht ist, welche die erste und die zweite Haut miteinander verbindet.

4. Verfahren nach einem der vorhergehenden Ansprüche, **dadurch gekennzeichnet, dass** das Halteprofil mindestens einen, vorzugsweise zwei, Flügel aufweist und zusätzlich der an den Endabschnitt (31) anschließende Teilabschnitt (32) der ersten Haut (3) mit einem ersten des mindestens einen Flügels (21; 21') des Halteprofils (2; 2') mittels einer ersten mindestens ein Garn umfassenden Naht (5) verbunden wird, und/oder der an den Endabschnitt (41) anschließende Teilabschnitt (42) der zweiten Haut (4) mit einem zweiten des mindestens einen Flügels (22; 22') des Halteprofils (2; 2') mittels einer zweiten mindestens ein Garn umfassenden Naht (6) verbunden wird.

5. Verfahren nach einem der vorhergehenden Ansprüche, **dadurch gekennzeichnet, dass** die Endabschnitte (31, 41) der ersten und zweiten Haut (3, 4) eine Länge zwischen 0,5 mm und 3 mm aufweisen.

6. Verfahren nach einem der vorhergehenden Ansprüche, **dadurch gekennzeichnet, dass** das Halteprofil (2; 2') auf einer Stichplatte (16; 16') geführt und/oder gehalten ist, wobei die Stichplatte (16; 16') vorzugsweise einen sich in der ersten Richtung (y) erstreckenden Kanal (17; 17') des Halteprofils (2; 2') aufweist.

7. Verfahren nach einem der vorhergehenden Ansprüche, **dadurch gekennzeichnet, dass** die erste und zweite mit dem Halteprofil (2; 2') verbundene Haut (3, 4) das Halteprofil (2; 2') in der ersten Richtung (y) betrachtet überragen.

8. Verfahren nach einem der vorhergehenden Ansprüche, **dadurch gekennzeichnet, dass** nach dem Einbringen der ersten Funktionsnaht (70) in die Nut (20; 20') das Halteprofil in eine Ausnehmung (9) eines Trägers (8) eingesetzt wird und das Halteprofil (2; 2') vorzugsweise formschlüssig und/oder stoffschlüssig mit dem Träger (8) verbunden wird.

9. Verfahren nach Anspruch 8, **dadurch gekennzeichnet, dass** das Halteprofil (2; 2') an einer dem Träger (8) zugewandten Unterseite (24) einen Zapfen (27') aufweist, wobei der Zapfen (27') in die Ausnehmung (9) des Trägers eingreift und vorzugsweise mindestens einen Anker (28') aufweist.

10. Verfahren nach einem der vorhergehenden Ansprüche, **dadurch gekennzeichnet, dass** der mindestens eine Flügel (21, 22; 21', 22') des Halteprofils (2; 2') jeweils eine Vielzahl von Schlitzen (25) und/oder Zähnen (26') aufweist.

11. Verfahren nach einem der vorhergehenden Ansprüche, **dadurch gekennzeichnet, dass** das Halteprofil (2; 2') aus einem Kunststoff besteht, welcher eine Shore-Härte zwischen 25 und 100 aufweist.

12. Verfahren nach einem der vorhergehenden Ansprüche, **dadurch gekennzeichnet, dass** die erste und/oder zweite Haut (3, 4) aus einem Leder, einem Kunstleder, einem Kunststoff, einem Gewebe oder einem Gewirke besteht.

13. Verfahren nach einem der vorhergehenden Ansprüche, **dadurch gekennzeichnet, dass** das Halteprofil und/oder Teile der Endabschnitte in einem definierten Abstand zum Verlauf der ersten Funktionsnaht gekürzt werden.

14. Verbundteil (1; 1'; 11'') mit einer ersten Haut (3), einer zweiten Haut (4) und einem mit der ersten und zweiten Haut mittels einer Naht (5, 6) verbundenen Halteprofil (2; 2'), wobei das Halteprofil (2; 2') eine sich in einer ersten Richtung (y) erstreckende Nut (20; 20') aufweist, wobei ein Endabschnitt (31) der ersten Haut (3), ein Endabschnitt (41) der zweiten Haut (4) und die Naht, welche als vorzugsweise mindestens ein Garn umfassende erste Funktionsnaht ausgebildet ist, in der Nut (20; 20') angeordnet sind,
**dadurch gekennzeichnet, dass** die erste und die zweite Haut (3, 4) mit einer zwischen einem an den jeweiligen Endabschnitt anschließenden Teilabschnitt (32, 42) und dem jeweiligen Endabschnitt (31, 41) angeordneten weiteren Funktionsnaht (7) miteinander verbunden sind.

## Claims

1. A method for the production of a composite part (50; 50'; 60; 60';1; 1'; 1"), which comprises the following steps:
a) introducing an end portion (31) of a first skin (3) and an end portion (41) of a second skin (4) into a groove (20; 20') of a holding profile (2; 2') which extends along a first direction (y);
b) joining the end portions of the first and/or second skin (3, 4) or a partial portion (32, 42) of the first and/or second skin (3, 4) which adjoins the respective end portions (31, 41) to the holding profile (2; 2'), wherein the first and/or second skin (3, 4) is joined to the holding profile (2; 2') by means of a first functional seam (70) which is arranged in the groove (20; 20') and preferably comprises at least one yarn,
**characterised in that**
the first and the second skin (3, 4), before the end portions (31, 41) are introduced into the groove (20; 20'), are joined together with a further functional seam (7, 7') arranged between a partial portion (32, 42) and the respective end portion (31, 41).

2. A method according to Claim 1, **characterised in that** the functional seam grips at least in sections behind a side wall (29; 29') of the groove (20; 20') of the holding profile (2; 2').

3. A method according to one of the preceding claims, **characterised in that** a second functional seam (71) which comprises at least one yarn and which when viewed from a visible side (S) of the first and/or second skin (3, 4) lies above the first functional seam (70) is introduced which joins the first and the second skin together.

4. A method according to one of the preceding claims, **characterised in that** the holding profile has at least one, preferably two, wings and additionally the partial portion (32) of the first skin (3) which adjoins the end portion (31) is joined to a first of the at least one wing (21; 21') of the holding profile (2; 2') by means of a first seam (5) which comprises at least one yarn, and/or the partial portion (42) of the second skin (4) adjoining the end portion (41) is joined to a second of the at least one wing (22; 22') of the holding profile (2; 2') by means of a second seam (6) which comprises at least one yarn.

5. A method according to one of the preceding claims, **characterised in that** the end portions (31, 41) of the first and second skin (3, 4) have a length of between 0.5 mm and 3 mm.

6. A method according to one of the preceding claims, **characterised in that** the holding profile (2; 2') is guided and/or held on a needle plate (16; 16'), the needle plate (16; 16') preferably having a channel (17; 17') of the holding profile (2; 2') which extends in the first direction (y).

7. A method according to one of the preceding claims, **characterised in that** the first and second skin (3, 4) which are joined to the holding profile (2; 2') extend beyond the holding profile (2; 2') when viewed in the first direction (y).

8. A method according to one of the preceding claims, **characterised in that** after the introduction of the first functional seam (70) into the groove (20; 20') the holding profile is inserted into a recess (9) in a support (8) and the holding profile (2; 2') is joined to the support (8) preferably in a positively locking manner and/or in a material-to-material connection.

9. A method according to Claim 8, **characterised in that** the holding profile (2; 2') on an underside (24) which faces the support (8) has a plug (27'), the plug (27') engaging in the recess (9) of the support and preferably having at least one anchor (28').

10. A method according to one of the preceding claims, **characterised in that** the at least one wing (21, 22; 21', 22') of the holding profile (2; 2') has in each case a large number of slits (25) and/or teeth (26').

11. A method according to one of the preceding claims, **characterised in that** the holding profile (2; 2') consists of a plastics material which has a Shore hardness of between 25 and 100.

12. A method according to one of the preceding claims, **characterised in that** the first and/or second skin (3, 4) consists of a leather, an imitation leather, a plastics material, a woven fabric or a knitted fabric.

13. A method according to one of the preceding claims, **characterised in that** the holding profile and/or parts of the end portions are shortened at a defined distance from the path of the first functional seam.

14. A composite part (1; 1'; 1") with a first skin (3), a second skin (4) and a holding profile (2; 2') which is joined to the first and second skin by means of a seam (5, 6), wherein the holding profile (2; 2') has a groove (20; 20') which extends in a first direction (y), wherein an end portion (31) of the first skin (3), an end portion (41) of the second skin (4) and the seam, which is preferably designed as a first functional seam which comprises at least one yarn, are arranged in the groove (20; 20'), **characterised in that** the first and the second skin (3, 4) are joined together with a further functional seam (7) which is arranged between a partial portion (32, 42) adjoining the respective end portion and the respective end portion (31, 41).

## Revendications

1. Procédé de fabrication d'une pièce composite (50 ; 50' ; 60 ; 60' ; 1 ; 1', 1"), qui comprend les étapes suivantes :
a) introduction d'un tronçon d'extrémité (31) d'une première peau (3) et d'un tronçon d'extrémité (41) d'une deuxième peau (4) dans une encoche (20; 20') d'un profilé de retenue (2 ; 2') s'étendant le long d'une première direction (y) ;
b) raccordement des tronçons d'extrémité de la première et/ou deuxième peau (3, 4), ou d'un tronçon (32, 42) adjacent aux tronçons d'extrémité (31, 41) respectifs de la première et/ou deuxième peau (3, 4), au profilé de retenue (2 ; 2'), la première et/ou deuxième peau (3, 4) étant raccordées au profilé de retenue (2 ; 2') au moyen d'une première couture opérationnelle (70), comprenant de préférence au moins un fil, disposée dans l'encoche (20 ; 20'),
**caractérisé en ce que**
la première et la deuxième peau (3, 4) sont, avant l'introduction des tronçons d'extrémité (31, 41) dans l'encoche (20; 20'), raccordées l'une à l'autre avec une autre couture opérationnelle (7, 7') disposée entre un tronçon (32, 42) et le tronçon d'extrémité (31, 41) respectif.

2. Procédé selon la revendication 1, **caractérisé en ce que** la couture opérationnelle vient prendre par l'arrière, au moins par tronçons, sur une paroi latérale (29 ; 29') de l'encoche (20 ; 20') du profilé de retenue (2 ; 2').

3. Procédé selon l'une des revendications précédentes, **caractérisé en ce qu'**une deuxième couture opérationnelle (71), comprenant au moins un fil, située au-dessus de la première couture opérationnelle (70) vu à partir d'un côté visible (S) de la première et/ou deuxième peau (3, 4), est mise en place et raccorde l'une à l'autre la première et la deuxième peau (3, 4).

4. Procédé selon l'une des revendications précédentes, **caractérisé en ce que** le profilé de retenue présente au moins une, de préférence deux ailettes, et **en ce que**, en plus, le tronçon (32) de la première peau (3) adjacent au tronçon d'extrémité (31) est raccordé à une première au moins une ailette (21 ; 21') du profilé de retenue (2 ; 2') au moyen d'une première couture (5) comprenant au moins un fil, et/ou le tronçon (42) de la deuxième peau (4) adjacent au tronçon d'extrémité (41) est raccordé à une deuxième au moins une ailette (22 ; 22') du profilé de retenue (2 ; 2') au moyen d'une deuxième couture (6) comprenant au moins un fil.

5. Procédé selon l'une des revendications précédentes, **caractérisé en ce que** les tronçons d'extrémité (31, 41) de la première et deuxième peau (3, 4) présentent une longueur comprise entre 0,5 mm et 3 mm.

6. Procédé selon l'une des revendications précédentes, **caractérisé en ce que** le profilé de retenue (2 ; 2') est guidé et/ou retenu sur une plaque à aiguille (16 ; 16'), la plaque à aiguille (16; 16') présentant de préférence un canal (17; 17') du profilé de retenue (2; 2') s'étendant dans la première direction (y).

7. Procédé selon l'une des revendications précédentes, **caractérisé en ce que** la première et deuxième peau (3, 4) raccordées au profilé de retenue (2 ; 2') dépassent le profilé de retenue (2 ; 2') vu dans la première direction (y).

8. Procédé selon l'une des revendications précédentes, **caractérisé en ce que**, après la mise en place de la première couture opérationnelle (70) dans l'encoche (20 ; 20'), le profilé de retenue est inséré dans un creux (9) d'un support (8), et **en ce que** le profilé de retenue (2 ; 2') est raccordé au support (8) de préférence par liaison de forme et/ou par liaison de matière.

9. Procédé selon la revendication 8, **caractérisé en ce que** le profilé de retenue (2 ; 2') présente un ergot (27') sur un côté inférieur (24) tourné vers le support (8), l'ergot (27') engrenant dans le creux (9) du support et présentant de préférence au moins un élément d'ancrage (28').

10. Procédé selon l'une des revendications précédentes, **caractérisé en ce que** la au moins une aile (21, 22 ; 21', 22') du profilé de retenue (2 ; 2') présente respectivement une multiplicité de fentes (25) et/ou de dents (26').

11. Procédé selon l'une des revendications précédentes, **caractérisé en ce que** le profilé de retenue (2 ; 2') est composé d'une matière plastique qui présente une dureté Shore comprise entre 25 et 100.

12. Procédé selon l'une des revendications précédentes, **caractérisé en ce que** la première et/ou deuxième peau (3, 4) sont composées d'un cuir, d'un cuir synthétique, d'une matière plastique, d'un tissu ou d'un tissu à mailles.

13. Procédé selon l'une des revendications précédentes, **caractérisé en ce que** le profilé de retenue et/ou des parties des tronçons d'extrémité sont raccourcis à une distance définie du tracé de la première couture opérationnelle.

14. Pièce composite (1 ; 1' ; 1") avec une première peau (3), une deuxième peau (4) et un profilé de retenue (2 ; 2') raccordé à la première et deuxième peau au moyen d'une couture (5,6)
le profilé de retenue (2 ; 2') présentant une encoche (20 ; 20') s'étendant dans une première direction (y), un tronçon d'extrémité (31) de la première peau (3), un tronçon d'extrémité (41) de la deuxième peau (4) et la couture qui est constituée en tant que première couture opérationnelle comprenant de préférence un fil étant disposés dans l'encoche (20 ; 20'),
**caractérisée en ce que** la première et la deuxième peau (3, 4) sont raccordées l'une à l'autre avec une autre couture opérationnelle (7) disposée entre un tronçon (32, 42) adjacent au tronçon d'extrémité respectif et le tronçon d'extrémité (31, 41) respectif.
